(19) Europäisches Patentamt
European Patent Office
Office européen des brevets

(11) **EP 3 604 889 B1**

(12) **EUROPÄISCHE PATENTSCHRIFT**

(45) Veröffentlichungstag und Bekanntmachung des Hinweises auf die Patenterteilung:
**09.11.2022  Patentblatt 2022/45**

(21) Anmeldenummer: **18000642.1**

(22) Anmeldetag: **01.08.2018**

(51) Internationale Patentklassifikation (IPC):
*F16M 11/10* (2006.01)    *G06F 1/18* (2006.01)
*A47B 21/007* (2006.01)    *F16M 11/18* (2006.01)
*F16M 11/24* (2006.01)    *F16M 11/28* (2006.01)

(52) Gemeinsame Patentklassifikation (CPC):
**F16M 11/10; F16M 11/18; F16M 11/24;
F16M 11/28;** A47B 21/0073; F16M 2200/063

(54) **VORRICHTUNG MIT SCHWENKBARER BEFESTIGUNGSPLATTE FÜR EIN ANZEIGEGERÄT**

DEVICE HAVING PIVOTABLE MOUNTING PLATE FOR A DISPLAY DEVICE

DISPOSITIF À PLAQUE DE FIXATION PIVOTANTE POUR UN APPAREIL D'AFFICHAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.02.2020  Patentblatt 2020/06**

(73) Patentinhaber: **Element One Multimedia GmbH
76456 Kuppenheim (DE)**

(72) Erfinder: **Küchel, Ralf
76467 Bietigheim (DE)**

(74) Vertreter: **Thämer, Wolfgang
Zürn & Thämer
Patentanwälte
Hermann-Köhl-Weg 8
76571 Gaggenau (DE)**

(56) Entgegenhaltungen:
DE-A1-102014 006 606    DE-A1-102016 124 303
US-A- 5 401 089    US-A1- 2006 150 869
US-A1- 2010 084 535

**Beschreibung**

Die Erfindung betrifft eine Vorrichtung mit einem Sockel und mit einer Befestigungsplatte für ein Anzeigegerät, wobei die Befestigungsplatte relativ zum Sockel von einer Ruhelage in Richtung einer Gebrauchslage und zurück schwenkbar ist, wobei in der Ruhelage eine an der Befestigungsplatte angeordnete oder mit dieser verbundene Anlagefläche für das Anzeigegerät zumindest annähernd normal zu einer Grundfläche des Sockels orientiert ist, wobei zwischen dem Sockel und der Befestigungsplatte mindestens zwei Verbindungselemente angeordnet sind, die sowohl im Sockel als auch an der Befestigungsplatte schwenkbar gelagert sind, wobei der Sockel eine parallel zur Grundfläche liegende Hüllfläche bestimmt, innerhalb der in der Ruhelage die Vorrichtung bei einer Normalprojektion auf diese Hüllfläche liegt, wobei in der Gebrauchslage die Befestigungsplatte in einer Normalprojektion auf die Ebene der Hüllfläche vollständig außerhalb der genannten Hüllfläche liegt und wobei eine Kurbelplatte zwei jeweils ein Verbindungselement bildende, gemeinsam an einer Verbindungsplatte angeordnete Kurbeln umfasst sowie eine Einsetzeinheit mit einem Gehäuse, mit einer im Gehäuse angeordneten Hebevorrichtung und mit einer mittels der Hebevorrichtung anhebbaren und absenkbaren Vorrichtung.

Aus der DE 299 19 495 U1 ist ein Gehäuse mit einem ausfahrbaren und in einem Gelenk schwenkbaren Monitor bekannt.

Aus der US 2010/0084535 A1 ist eine manuell betätigbare Vorrichtung zum Verstellen einer Anzeigevorrichtung bekannt.

Die US 5 401 089 A1 offenbart eine Vorrichtung mit einem motorisch schwenkbaren Monitor. Die Schwenkachse des Monitors und die Motorwelle haben hierbei einen konstanten Abstand zueinander.

Aus der DE 10 2014 006 606 A1 ist ein manuell betätigbarer Haltemechanismus für eine Anzeigevorrichtung bekannt. Ein Ausgleichsdämpfer verhindert das unbeabsichtigte Absenken der Anzeigevorrichtung aus der eingestellten Lage.

Der vorliegenden Erfindung liegt die Problemstellung zugrunde, eine Vorrichtung zu entwickeln, um ein Anzeigegerät zwischen einer kompakten Ruhelage und einer für einen Bediener ergonomisch günstigen Gebrauchslage zu bewegen.

Diese Problemstellung wird mit den Merkmalen des Hauptanspruches gelöst. Dazu sind die Verbindungselemente und die Befestigungsplatte relativ zum Sockel mittels mindestens eines Elektromotors antreibbar. Entweder sind die Befestigungsplatte und die Verbindungselemente relativ zueinander und relativ zum Sockel zwangsgeführt oder in der Kurbelplatte ist ein zweiter Elektromotor angeordnet, der die Befestigungsplatte relativ zur Kurbelplatte schwenkt.

In der Einsetzeinheit ist der Sockel mit einer Hebevorrichtung verbunden.

Die Vorrichtung ermöglicht es, ein Anzeigegerät, z.B. einen Monitor in der Bauform eines Touchscreens aus einer zumindest annähernd vertikalen Ruhestellung heraus in Richtung des Bedieners und zurück zu bewegen. Hierbei wird der Monitor schräggestellt, sodass der Bediener stehend oder sitzend problemlos den Bildschirm betrachten kann. Auch kann er manuell Eingaben am Bildschirm vornehmen.

Alle Verbindungselemente sind sowohl im Sockel als auch in der Befestigungsplatte schwenkbar gelagert. Hierbei sind die Schwenkachsen aller Schwenklager parallel zueinander ausgerichtet. Die Schwenkachsen liegen parallel zur Grundfläche des Sockels.

In der Ruhelage ist die Vorrichtung kompakt ausgebildet, sodass sie gut lagerbar ist. Auch ist sie in Kombination mit einer Hebevorrichtung z.B. relativ zu einem Tisch absenkbar und anhebbar. Bei ausgefahrener Vorrichtung ist diese aus der Ruhestellung in Richtung der Gebrauchslage auffaltbar. Beim Verfahren aus Richtung der Gebrauchslage in die Ruhelage wird die Vorrichtung zusammengefaltet oder zusammengeklappt. In der Ruhelage kann ein Positionsschalter, z.B. ein Endschalter ein Absenken oder Anheben der Vorrichtung freigeben.

Weitere Einzelheiten der Erfindung ergeben sich aus den Unteransprüchen und der nachfolgenden Beschreibung schematisch dargestellter Ausführungsformen.

Figur 1:    Einsetzeinheit mit abgesenktem Monitor;
Figur 2:    Querschnitt durch die Einsetzeinheit nach Figur 1;
Figur 3:    Einsetzeinheit mit der ausgefahrenen Vorrichtung in Ruhelage;
Figur 4:    Isometrische Ansicht der Einsetzeinheit nach Figur 3;
Figur 5:    Einsetzeinheit in der Gebrauchslage;
Figur 6:    Seitenansicht der Figur 5;
Figur 7:    Vorrichtung ohne Monitor;
Figur 8:    Querschnitt von Figur 7;
Figur 9:    Rückansicht von Figur 5 bei teilweise abgenommener Verkleidung;
Figur 10:   Sockel;
Figur 11:   Unterschale;
Figur 12:   Befestigungsplatte;

Figur 13:    Vorrichtung mit Zugmitteltrieb;

Figur 14:    Vorrichtung in der Ruhelage mit dem Benutzer abgewandten Monitor;

Figur 15:    Gelenkviereck mit längenverstellbarer Schwinge.

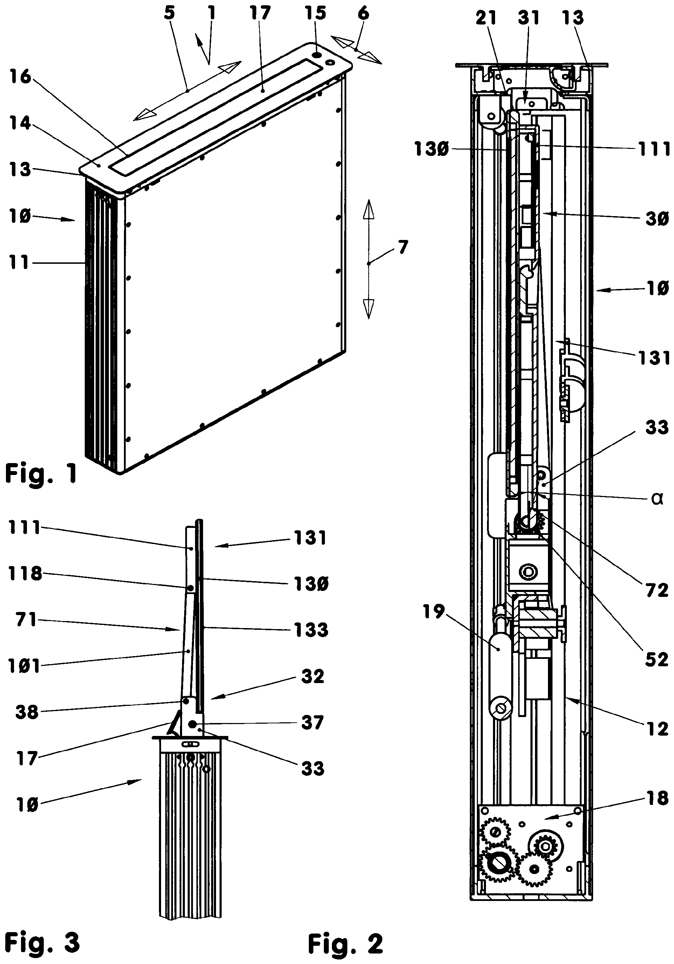

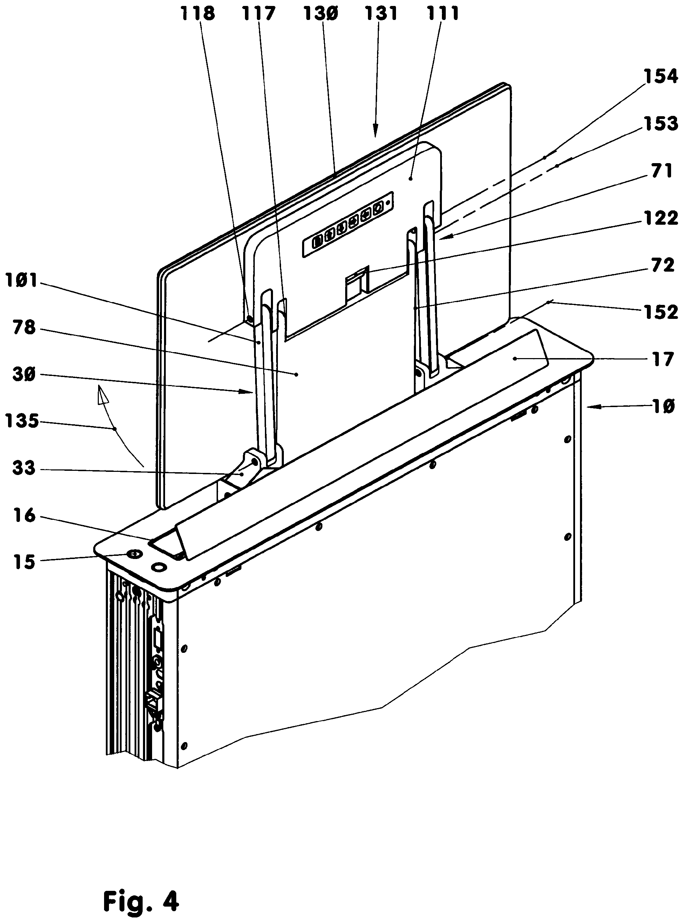

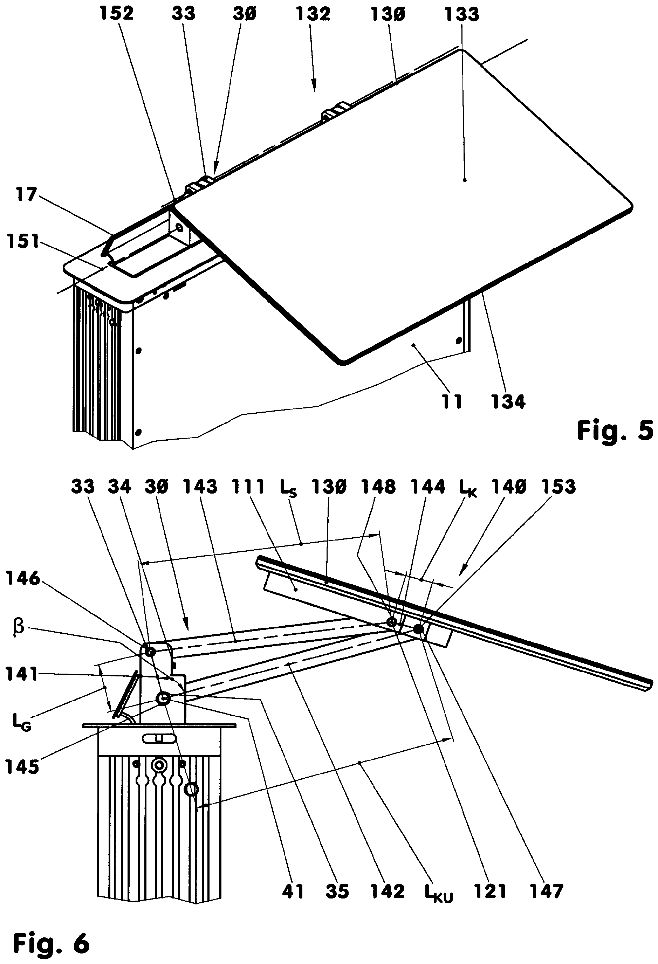

Die Figuren 1 und 2 zeigen in einer isometrischen Ansicht und in einer Schnittdarstellung eine Einsetzeinheit (10) mit einem abgesenkten Anzeigegerät (130), z.B. einem Monitor (130). Derartige Einsetzeinheiten (10) werden beispielsweise in einen Tisch oder in ein Pult eingebaut. Aus der dargestellten abgesenkten Lage (31) ist der Monitor (130) mittels einer Hebevorrichtung (12) in vertikaler Richtung ausfahrbar, vgl. die Figuren 3 und 4. Der Monitor (130) steht vor und nach dem Ausfahren in einer vertikal ausgerichteten Ruhelage (131). Anschließend ist der Monitor (130) in eine Gebrauchslage (132) schwenkbar und verfahrbar, vgl. die Figuren 5 - 9.

Die Einsetzeinheit (10) umfasst ein quaderförmiges Einsatzgehäuse (11) mit einem obenliegenden Auflageflansch (13). An der Oberseite (14) sind Betätigungstasten (15) und/oder Kontrollleuchten angeordnet. Beim Drücken einer Betätigungstaste (15) kann beispielsweise der Monitor (130) ausgefahren und in die Gebrauchslage (132) geschwenkt werden. An der Oberseite (14) befindet sich ein Führungsschlitz (16) mit rechteckiger Querschnittsfläche. Beispielsweise ist die Länge des Führungsschlitzes (16) in der Längsrichtung (5) elfmal so groß wie seine Breite in der Breitenrichtung (6). Der Führungsschlitz (16) ist in den Darstellungen der Figuren 1 und 2 z.B. mittels einer Abdeckklappe (17) verschlossen.

Die Schnittebene der Figur 2 ist die Mittenquerebene der Einsatzeinheit (10). Im Einsatzgehäuse (11) sind die Hebevorrichtung (12) und eine den Monitor (130) tragende Vorrichtung (30) angeordnet. Diese Vorrichtung (30) ist im Folgenden auch als Verfahrvorrichtung (30) bezeichnet.

Die Hebevorrichtung (12) ist im unteren Bereich des Einsatzgehäuses (11) angeordnet. Sie umfasst beispielsweise einen Antrieb (18), der z.B. mit einem Fördergurt, mit einer Zylinder-Kolben-Einheit (19), etc. zusammenwirkt. Mittels der Hebevorrichtung (12) wird die Verfahrvorrichtung (30) mit dem Monitor (130) aus der in der Figur 2 dargestellten abgesenkten Lage (31) in die in den Figuren 3 und 4 dargestellte ausgefahrene Lage (32) und zurück gefördert.

Die Verfahrvorrichtung (30) weist einem im Einsatzgehäuse (11) geführten Sockel (33) auf, der mittels mindestens eines Verbindungselements (71) mit einer Befestigungsplatte (111) gelenkig verbunden ist. Die Befestigungsplatte (111) liegt in der Darstellung der Figur 2 zumindest annähernd parallel zum Verbindungselement (71). Der vom Verbindungselement (71) und einer Anlagefläche (112) für den Monitor (130) der Befestigungsplatte (111) eingeschlossene Winkel ist hierbei kleiner als fünf Grad. Im Ausführungsbeispiel beträgt der Winkel zwei Grad. Die Befestigungsplatte (111) liegt hierbei oberhalb des Verbindungselements (71). Der Sockel (33), das Verbindungselement (71) und die Befestigungsplatte (111) stehen damit in einer fast gestreckten Stellung. An der Befestigungsplatte (111) ist der Monitor (130) befestigt. Er liegt hierbei an der Anlagefläche (112) der Befestigungsplatte (111) an. Die Anlagefläche (112) kann auch Teil eines Adapters sein, der mit der Befestigungsplatte (111) verbunden ist. Der Monitor (130) ist beispielsweise ein Flachbildschirm in der Bauform eines Touchscreens. Damit können am Bildschirm (130) manuell Eingaben vorgenommen werden. Der Bildschirm (130) kann einen integrierten Touchstift aufweisen. Das an der Vorrichtung (30) angeordnete Anzeigegerät (130) kann ein Tablet sein.

In der Ruhelage (131) belastet der Monitor (130) im Ausführungsbeispiel einen im Sockel (33) angeordneten Positionsschalter (34) z.B. einen Tast-Endschalter (34), vgl. Figur 6. Bei Lage des Monitors (130) in der Ruhelage (131) ist der dargestellte Tast-Endschalter (34) eingedrückt. Der Monitor (130) kann hierbei am Sockel (33) anliegen. Der Sockel (33) kann auch ohne Positionsschalter (34) ausgeführt sein. Auch kann der Monitor (130) einen geringen Abstand, z.B. bis zu 2 Millimeter, vom Sockel (33) haben. Der Positionsschalter (34) kann auch ein Magnetschalter, eine Lichtschranke, etc. sein.

Die Verfahrvorrichtung (30) ist damit kompakt ausgebildet. Ihre Länge in der Längsrichtung (5) und ihre Breite in der Breitenrichtung (6) wird durch den Sockel (33) bestimmt, der beispielsweise an einer Führungsschiene (21) des Einsatzgehäuses (11) anliegt. Der Sockel (33) hat eine z.B. als Standfläche ausgebildete Grundfläche (66). Diese Grundfläche (66) ist parallel zu einer horizontalen Ebene. Die Grundfläche (66) kann eine Körpergrenzfläche sein oder eine im eingebauten Zustand waagerechte ebene virtuelle Fläche sein.

Die Figuren 3 und 4 zeigen die Einsetzeinheit (10) mit der Vorrichtung (30) in der ausgefahrenen Lage (32). Hierbei zeigt die Figur 3 eine Seitenansicht quer zur Längsrichtung (5). In der Figur 4 ist eine isometrische Ansicht von hinten oben dargestellt. Die Abdeckklappe (17) des Einsatzgehäuses (11) ist geöffnet. Beispielsweise liegt sie am Sockel (33) der Verfahrvorrichtung (30) an. Die Verfahrvorrichtung (30) mit dem Monitor (130) steht in der Ruhelage (131). Die Lage des Monitors (130) relativ zum Sockel (33) ist gegenüber der Darstellung der Figur 2 unverändert. Der Tast-Endschalter (34) ist weiterhin betätigt. In der ausgefahrenen Lage (32) der Verfahrvorrichtung (30) ragt der Sockel (33) beispielsweise um 53 % seiner Höhe über die Oberseite (14) des Einsatzgehäuses (11). Der Sockel (33) hat eine quaderförmige Hüllkontur. Diese Hüllkontur hat eine parallel zur Grundfläche (66) liegende z.B. rechteckige Hüllfläche. Bei einer Normalprojektion der Vorrichtung (30) auf diese Hüllfläche liegt die Vorrichtung (30) in der Ruhelage (131) innerhalb dieser Hüllfläche. Beispielsweise gilt dies auch bei einer Vorrichtung (30) mit montiertem Monitor (130).

Der Sockel (33), die Verbindungselemente (71) und die Befestigungsplatte (111) bilden ein Getriebe (140), vgl. Figur 6. Im Ausführungsbeispiel ist dieses Getriebe (140) ein Gelenkviereck (140). Es hat ein Gestell (141), eine Kurbel (142), eine Schwinge (143) und ein Koppelglied (144). Hierbei ist das Gestell (141) mittels der Kurbel (142) und der Schwinge (143), die die Verbindungselemente (71) bilden, mit dem Koppelglied (144) verbunden. Die einzelnen Getriebeglieder (141 - 144) sind mittels Schwenkgelenken (145 - 148) miteinander verbunden. Die Schwenkachsen (151 - 154) aller Schwenkgelenke (145 - 148) sind parallel zueinander ausgerichtet, vgl. die Figuren 4 und 5.

Das Gestell (141) wird durch den Sockel (33) gebildet. Es hat pro Seite zwei Schwenklagersitze (35, 36), die in der Breitenrichtung (6) und in der Höhenrichtung (7) versetzt zueinander angeordnet sind. Die Schwenklagersitze (35, 36) beider Seiten fluchten miteinander. Ihr in eine Querebene projizierter Abstand der Schwenkachsen (151, 152) beträgt im Ausführungsbeispiel 33,56 Millimeter. Dieser Abstand ist im Folgenden als Länge ($L_G$) des Gestells (141) bezeichnet. Die in der Projektionsebene die beiden Schwenklinien (151, 152) verbindende Gerade schließt mit einer horizontalen Ebene der Einsetzvorrichtung (10) z.B. einen Winkel von 75 Grad ein.

Das Koppelglied (144) wird durch die Befestigungsplatte (111) gebildet. In der Befestigungsplatte (111) sind vier Schwenklagersitze (113 - 116) angeordnet, von denen jeweils zwei miteinander fluchten. Der Abstand ihrer Schwenkachsen (153, 154) in einer gemeinsamen Querebene beträgt im Ausführungsbeispiel 17,84 Millimeter. Dieser Abstand ist im Folgenden als Koppellänge ($L_K$) bezeichnet. Die mittels der beiden Schwenkachsen (153, 154) der Befestigungsplatte (111) aufgespannte Ebene schließt mit der z.B. ebenen Anlagefläche (112) für den Monitor (130) beispielsweise einen Winkel von 3 Grad ein. Hierbei ist die obere Schwenkachse (154) weiter entfernt von der Anlagefläche (112) als die untere Schwenkachse (153). Bei montiertem Monitor (130) ist die Anlagefläche (112) parallel zur Sichtseite (133) des Monitors (130). Die Dicke des Monitors (130) beträgt beispielsweise 8 Millimeter.

Das im Ausführungsbeispiel dargestellte Getriebe (140) hat eine Kurbelplatte (72). Diese umfasst zwei Kurbeln (142), die gemeinsam an einer Verbindungsplatte (73) angeordnet sind. Die Kurbelplatte (72) ist symmetrisch zu einer Mittenquerebene der Vorrichtung (30) ausgebildet. Jede Kurbel (142) hat zwei Schwenklagerhülsen (74, 75). Der Abstand der Schwenkachsen (151, 153) der beiden Schwenklagerhülsen (74, 75) einer Kurbel (142) wird im Folgenden als Kurbellänge ($L_{KU}$) bezeichnet. Im Ausführungsbeispiel beträgt die Kurbellänge ($L_{KU}$) 173 Millimeter. Die Kurbelplatte (72) ist im Ausführungsbeispiel in dem dem Monitor (130) zugewandten unteren Schwenklager (37) am Sockel (33) gelagert. Die Lagerung an der Befestigungsplatte (111) ist an der der Anlagefläche (112) näherliegenden Lagerstelle (113, 115). In der in den Figuren 3 und 4 dargestellten Ruhelage (131) schließt die Kurbel (142) mit einer vertikalen Ebene einen Winkel von z.B. einem Grad ein, wobei die sockelseitige Lagerstelle (37) weiter in Richtung des Monitors (130) orientiert ist als die Kurbelplattenlager (117) an der Befestigungsplatte (11). Anstatt der Kurbelplatte (72) ist auch der Einsatz einer oder zwei Kurbelstangen denkbar.

Im Sockel (33) und in der Befestigungsplatte (111) sind weiterhin zwei Schwinghebel (101) gelagert. Diese liegen in der Längsrichtung (15) außerhalb der Kurbelplatte (72). Sie sind symmetrisch zur vertikalen Mittenquerebene der Kurbelplatte (72) angeordnet. Jeder dieser Schwinghebel (101) verbindet ein Schwenklager (38) des Sockels (33) mit einem Schwenklager (118) der Befestigungsplatte (111). Der Abstand der Schwenkachsen (152, 154) eines Schwinghebels (101) zueinander ist im Folgenden als Länge der Schwinge ($L_S$) bezeichnet. Im Ausführungsbeispiel beträgt die Länge ($L_S$) der einzelnen Schwinge (143) 158,5 Millimeter.

In der Ruhestellung (131) gilt:

$$L_{KU} + L_K > L_G * \cos \alpha + (L_S{}^2 - L_G{}^2 * \sin^2 \alpha)^{1/2}$$

mit
a: von Gestell (141) und Kurbel (142) in der Ruhelage (131) eingeschlossener Winkel.

Die Summe der Kurbellänge ($L_{KU}$) und der Koppellänge ($L_K$) ist größer als die Summe der Länge ($L_G$) des Gestells (141) multipliziert mit dem Kosinus des von der Kurbel (142) und dem Gestell (141) eingeschlossenen Winkels ($\alpha$) und der positiven Wurzel aus dem Quadrat der Länge ($L_S$) der Schwinge (143), vermindert um das Produkt aus dem Quadrat der Länge ($L_G$) des Gestells (141) und dem Quadrat des Sinus des von der Kurbel (142) und dem Gestell (141) eingeschlossenen Winkels ($\alpha$).

Unter dieser Bedingung ist das Getriebe (140) in der Ruhelage (131) in der Richtung kleinerer eingeschlossener Winkel ($\alpha$) blockiert. Im Ausführungsbeispiel beträgt der Winkel ($\alpha$) in der Ruhelage (131) 14 Grad. In der Ruhelage (131) ist damit kein Anschlag erforderlich. In der Ruhelage (131) ist damit das Verhältnis des größten Abstandes zweier diagonal zueinander versetzter Schwenkgelenke (145, 148) zu dem kürzesten Abstand zweier diagonal zueinander versetzter Schwenkgelenke (146, 147) maximal.

Die Schwenklager (37, 38, 117, 118) sind im Ausführungsbeispiel als Gleitlager ausgebildet. Hierbei sind beispielsweise im Sockel (33) und in der Befestigungsplatte (111) Gleitlagerbuchsen (39; 119) eingesetzt, die jeweils einen Lagerstift (41; 121) führen. Der jeweilige Lagerstift (41; 121) ist in der Kurbelplatte (72) bzw. in Schwinghebel (101) mittels eines Fixierstiftes (76) fixiert. Anstatt der dargestellten Gleitlager können auch Sinterlager oder Wälzlager eingesetzt werden. Das Spiel der Schwenklager (37, 38, 117, 119) ist im Ausführungsbeispiel jeweils kleiner als zwei Zehntel Millimeter.

Die Figuren 5 - 9 zeigen die Einsetzeinheit (10) in einer Gebrauchslage (132). Der Monitor (130) liegt jetzt in einer Ebene, die mit einer horizontalen Ebene einen Winkel von 19 Grad einschließt. Dieser Winkel kann beispielsweise zwischen 10 Grad und 30 Grad betragen. Es ist aber auch denkbar, den Winkel zwischen dem Monitor (130) bzw. der hierzu parallelen Anlagefläche (112) und der Grundfläche (66) zwischen 0 Grad und 90 Grad auszubilden. Die Kurbel (142) schließt mit dem Gestell (141) in der Darstellung der Figur 6 einen Winkel von 88 Grad ein. Die Unterkante (134) des Monitors (130) ist um das 1,75-fache der Länge ($L_{KU}$) der Kurbel (142) zum Benutzer hin verfahren. Hierbei ist die Unterkante (134) des Monitors (130) um 4 % der Länge ($L_{KU}$) der Kurbel (142) abgesenkt. In einer Normalprojektion auf die Ebene der Hüllfläche des Sockels (33) liegt die Befestigungsplatte (111) außerhalb dieser Hüllfläche. Der Massenschwerpunkt des Monitors (130) liegt außerhalb des Sockels (33). Im Ausführungsbeispiel entspricht der Abstand des Massenschwerpunkts des Monitors (130) von der Schwenkachse (151) der Kurbel (142) im Gestell (141) der oben genannten Mindestlänge der Summe der Länge ($L_{KU}$) der Kurbel (142) und der Länge ($L_K$) der Koppel (144).

Für die Gebrauchslage (132) gilt:

$$L_S + L_K > (L_{KU}^2 + L_G^2 - 2 * L_{KU} * L_G * \cos \beta)^{1/2}$$

mit

β: von der Kurbel (142) und dem Gestell (141) in der Gebrauchslage (132) eingeschlossener Winkel

In der Gebrauchslage (132) ist die Summe aus der Länge ($L_S$) der Schwinge (143) und der Länge ($L_K$) der Koppel (144) größer als die positive Wurzel aus der Summe des Quadrats der Länge ($L_{KU}$) der Kurbel (142) und des Quadrats der Länge des Gestells (141), vermindert um das doppelte Produkt der Länge ($L_{KU}$) der Kurbel (142), der Länge ($L_G$) des Gestells (141) und des Kosinus des vom Gestell (141) und der Kurbel (142) eingeschlossenen Winkels (β).

Unter diesen Bedingungen ist für das Getriebe (140) des Ausführungsbeispiels der maximale Winkel β zwischen der Kurbel (142) und dem Gestell (141) 90 Grad. Bei diesem Winkel blockiert das Getriebe (140), sodass ein größerer Schwenkwinkel verhindert wird. Die Einsetzeinheit (10) steht dann in einer stabilen Gebrauchslage (132). Der Bediener kann den Touchscreen (130) bequem bedienen. Belastungen des Touchscreens (130) bei der Bedienung führen nicht zu einer Verstellung des Monitors (130). Das Getriebe (140) erfordert in dieser Endlage keinen Anschlag.

Das Getriebe (140) kann auch für einen anderen Schwenkwinkelbereich ausgelegt werden. Hierfür sind - ausgehend von der Anfangs- und der Endlage der Koppel (144) - die gestellseitigen Schwenkgelenke (145, 146) auf Mittelsenkrechten der Verbindungslinien der Koppellager (147, 148) beider Positionen (131, 132), der Ruhelage (131) und der Gebrauchslage (132), anzuordnen.

In der Gebrauchslage (132) ist der Positionsschalter (34) unbetätigt. Beispielsweise ragt er aus dem Sockel (33) heraus. Die Hebevorrichtung (12) ist verriegelt. Die Vorrichtung (30) kann auch ohne Verbindung mit einer Hebevorrichtung (12) ausgebildet sein. Beispielsweise ist der Sockel (33) dann an einer Standplatte befestigt. Die Standplatte und/oder der Sockel (33) kann eine hohe Masse aufweisen, sodass nur eine geringe Standfläche erforderlich ist.

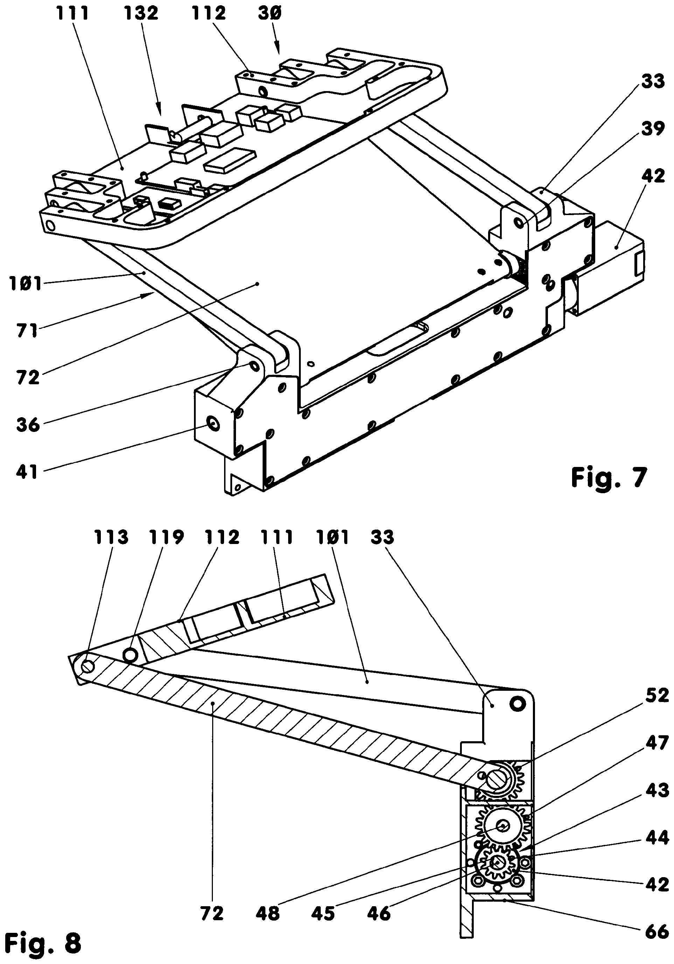

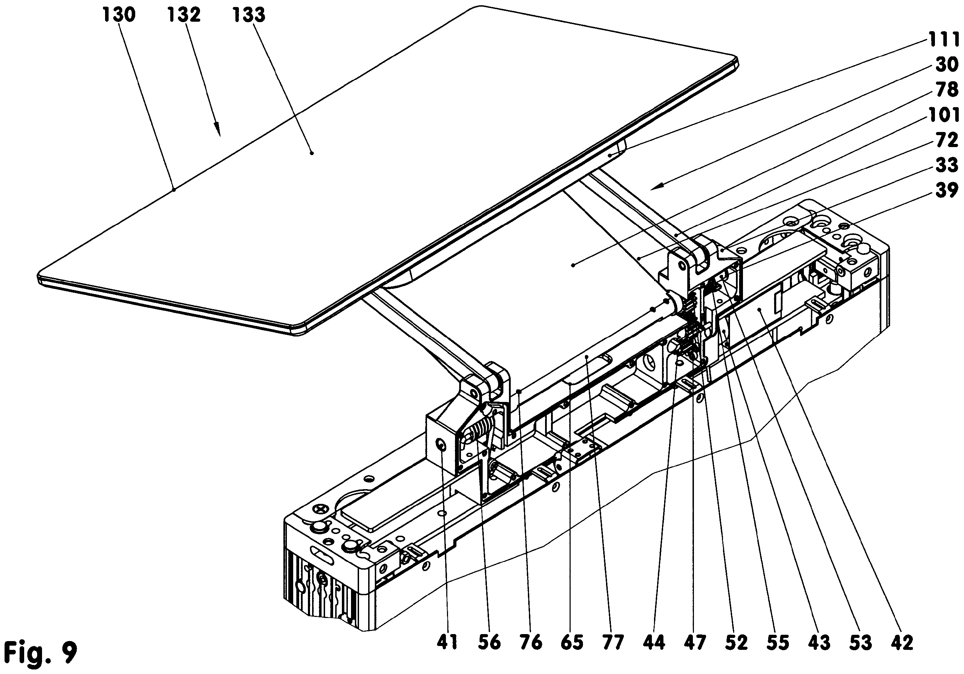

Im Ausführungsbeispiel erfolgt die Verstellung der Verfahrvorrichtung (30) aus der Ruhelage (131) in die Gebrauchslage (132) mittels eines Elektromotors (42), vgl. die Figuren 8 und 9. Hierbei zeigt die Figur 8 einen Querschnitt der Vorrichtung (30), wobei die Schnittebene in der Kurbelplatte (72) liegt. Der Elektromotor (42) ist beispielsweise ein Gleichstrommotor (42), der im Sockel (33) angeordnet ist. Er ist als Getriebemotor ausgebildet. Beispielsweise hat er ein angebautes Getriebe, z.B. ein Zahnradgetriebe (43) mit einer Übersetzung von 1:50 ins Langsame. Das Getriebe (43) kann z.B. als Stirnradgetriebe in der Bauform eines Planetengetriebes, als Spindelgetriebe, etc. ausgebildet sein. Anstatt eines Elektromotors (42) ist auch der Einsatz eines hydraulischen Antriebs denkbar.

Der Elektromotor (42) hat ein Antriebsmoment von z.B. sechs Newtonmetern. Er hat am Ausgang des Zahnradgetriebes (43) ein Antriebszahnrad (44). Dieses ist aus Stahl hergestellt, z.B. mittels eines Wälzfräsverfahrens. Es ist als Gradstirnrad ausgebildet und hat einen Modul von einem Millimeter. Im Ausführungsbeispiel hat es 12 Zähne. Das Antriebszahnrad (44) hat z.B. an seiner Bohrung einen Mitnahmesteg (45), der formschlüssig in eine komplementäre Ausnehmung der Antriebswelle (46) eingreift.

Das Antriebszahnrad (44) kämmt mit einem Zwischenrad (47). Dieses ist in der Querrichtung (6) versetzt zum Antriebszahnrad (44) angeordnet. Seine Welle (48) ist parallel zur Antriebswelle (46) ausgerichtet. Das Zwischenrad (47) hat 20 Zähne. Es ist aus Kunststoff oder aus Metall hergestellt. Mittels eines einseitigen Bundes ist es an seiner Welle (48) fixiert. Zwei durch Sockelöffnungen (51) zugängliche Einstellschrauben dienen der Einstellung der Welle (48) des Zwischenrades (47). Hiermit können beispielsweise das Spiel und die Dämpfung des Antriebsstranges eingestellt werden. Gegebenenfalls kann die Welle (48) auch einen Rotationsdämpfer aufweisen.

Oberhalb des Zwischenrads (47) ist ein Abtriebsrad (52) abgeordnet. Die Lagerwelle (53) dieses Abtriebsrades (52) steht oberhalb der Antriebswelle (46). Diese Lagerwelle (53) ist fest mit der Kurbelplatte (72) verbunden. Sie ist parallel zur Zwischenwelle (48) und zur Antriebswelle (46) ausgerichtet. Das Abtriebsrad (52) ist aus einem Stahlwerkstoff hergestellt. Es ist z.B. als Stirnrad ausgebildet und hat 20 Zähne. Die Übersetzung des Zahnradgetriebes (43) zusammen mit den Zahnrädern (44, 47, 52) beträgt z.B. 1:80 ins Langsame. Die Zahnräder (44, 47, 52) können gegebenenfalls durch Zahnsegmente ersetzt werden.

Auf der Lagerwelle (53) sitzt beispielsweise eine als Schenkelfeder (55) ausgebildete Rückstellfeder (55). Diese stützt sich am Sockel (33) und an der Lagerwelle (53) ab. Hierbei belastet sie die Kurbelplatte (72) entgegen der von der Ruhelage (131) in die Gebrauchslage (132) orientierte Aufschwenkrichtung (135). Die Schenkelfeder (55) kann sich auch mit einem Schenkel an der Kurbelplatte (72) abstützen. Auf der Lagerwelle (53) kann zusätzlich ein Rotationsdämpfer sitzen. Dieser ist dann an der Lagerwelle (53) befestigt und stützt sich am Sockel (33) ab.

Eine zweite Rückstellfeder (56) ist auf dem Lagerzapfen (41) angeordnet. Diese Rückstellfeder (56) ist beispielsweise spiegelsymmetrisch zur ersten Rückstellfeder (55) in Bezug auf eine Mittenquerebene der Verfahrvorrichtung (30) ausgebildet und angeordnet. Das Rückstellmoment beider Rückstellfedern (55, 56) zusammen beträgt beispielsweise 3,8 Newtonmeter. Beispielsweise beträgt das Rückstellmoment der Rückstellfedern (55, 56) zwischen 25 % und 50 % des maximalen Abtriebmoments des Antriebsstrangs (42, 43, 44, 47, 52) an der Lagerwelle (53).

Die Verfahrvorrichtung (30) kann ohne Antriebsmotor (42) und/oder ohne Rückstellfedern (55, 56) ausgebildet sein. Die Bedienung der Verfahrvorrichtung (30) erfolgt dann beispielsweise manuell. Der Monitor (130) und/oder die Befestigungsplatte (111) können Rollen zum Abrollen z.B. auf einem Tisch aufweisen.

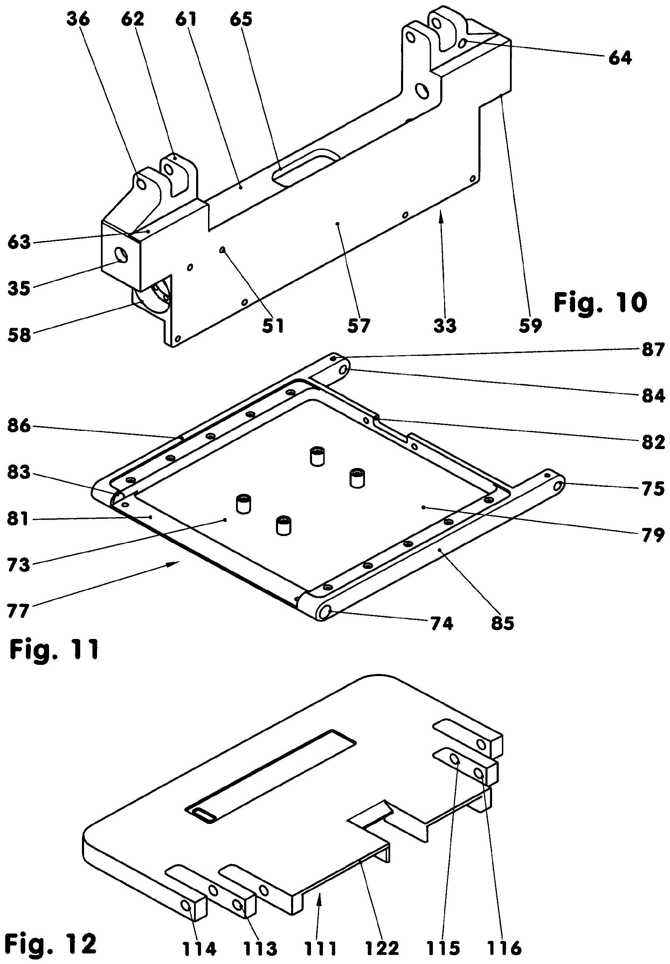

In der Figur 10 ist der Sockel (33) als Einzelteil dargestellt. Die Darstellung zeigt den Sockel (33) von der dem Monitor (130) zugewandten Vorderseite (57). Der Sockel (33) hat eine quaderförmige Hüllkontur. In einer Draufsicht ist die Hüllfläche des Sockels (33) ein Rechteck. In seinem unteren Bereich hat der Sockel (33) eine Motoraufnahme (58) zur Aufnahme des Elektromotors (42) und die zwei als Werkzeugdurchbrüche ausgebildete Sockelöffnungen (51). Durch diese Werkzeugdurchbrüche (51) hindurch ist bei montierten Verfahrvorrichtung (30) das Zwischenrad (47) einstellbar.

Zwei auskragende Seitenerker (59) weisen in Längsrichtung (15) orientierte als Durchgangsbohrungen (35) ausgebildete Schwenklagersitze (35) auf. In diesen Durchgangsbohrungen (35) sind bei montierter Verfahrvorrichtung (30) die sockelseitigen Kurbellager (37) angeordnet.

An der Oberseite (61) des Sockels (33) ragen zwei Paare von Gabelstützen (62) heraus. Die Gabelstützen (62) sind relativ zu den Durchgangsbohrungen (35) nach hinten versetzt. Die Längsdurchbrüche (36) der Gabelstützen (62) dienen zur Aufnahme der sockelseitigen Schwingenlager (38). Unterhalb der Gabelstützen (62) hat der Sockel (33) einen Absatz (63). In diesem Bereich liegt in der Ruhelage (131) der Monitor (130). Oberhalb des Absatzes (63) hat der Sockel (33) eine Aufnahmeausnehmung (64) für den Tast-Endschalter (34).

Beispielsweise mittig zwischen den Gabelstützen (62) hat der Sockel (33) einen Kabelführungsdurchbruch (65). Durch diesen Kabelführungsdurchbruch (65) hindurch werden bei montierter Verfahrvorrichtung (30) Leitungen für die Strom- und Datenkommunikation mit dem Monitor (130) geführt.

Die Figur 11 zeigt eine Unterschale (77) der Kurbelplatte (72). Bei montierter Kurbelplatte (72) ist auf der Unterschale (77) eine z.B. plane Abdeckplatte (78) montiert. Die Unterschale (77) begrenzt einen Innenraum (79), der mittels eines Einführdurchbruchs (81) und eines Ausführdurchbruchs (82) mit der Umgebung (1) verbunden ist. Durch den Einführdurchbruch (81) und den Ausführdurchbruch (82) hindurch sind bei montierter Verfahrvorrichtung (30) die Leitungen für die Strom- und Datenkommunikation geführt.

Die Unterschale (77) hat vier als Schwenklagerhülsen (74, 75, 83, 84) ausgebildete Lagerzapfenaufnahmen (74, 75, 83, 84). Jeweils zwei dieser Lagerzapfenaufnahmen (74, 75; 83, 84) sind an einer Randstrebe (85; 86) angeordnet. Diese Lagerzapfenaufnahmen (74, 75; 83, 84) bilden zusammen mit den sie verbindenden Randstreben (85; 86) jeweils eine Kurbel (142). An den Lagerzapfenaufnahmen (74, 75, 83, 84) sind Gewindedurchbrüche (87) zur Aufnahme von Fixierschrauben für die Lagerstifte (41) angeordnet. Im Bereich der oberen Lagerzapfenaufnahmen (75; 84) kragen die Randstreben (85, 86) über die Verbindungsplatte (73) hinaus.

In der Figur 12 ist die Befestigungsplatte (111) dargestellt. Diese hat eine Kabeleinführöffnung (122) und vier Lageraufnahmen (113 - 116). Alle Lageraufnahmen (113 - 116) haben jeweils zwei einander gegenüberliegende Lagerbuchsenaufnahmen. Hierbei sind die Kurbelplattenlager (117) innen und die Schwingenlager (118) außen angeordnet.

Beim Zusammenbau der Verfahrvorrichtung (30) wird beispielsweise zunächst der Antriebsmotor (42) mit dem Zahnradgetriebe (43) und dem Antriebsrad (44) in den Sockel (33) eingesetzt und befestigt. Nach dem Einlegen der Zwischenradwelle (48) mit dem Zwischenrad (47) werden die Gleitlagerbuchsen (39) in die sockelseitigen Schwenklagersitze (35) für die Kurbelplattenlager (37) eingeschoben. Beispielsweise von außen werden die Lagerstifte (41, 53) eingeschoben. Hierbei wird auf jeden Lagerstift (41; 53) eine Rückstellfeder (55; 56) aufgesetzt. Auf den motorseitigen Lagerzapfen (53) wird das Abtriebszahnrad (52) aufgeschoben. Nach dem Einsetzen der Unterschale (77) der Kurbelplatte (72) werden die Lagerzapfen (41, 53) weiter eingeschoben und in der Unterschale (77) der Kurbelplatte (72) mittels der Fixierschrauben (76) fixiert. Nun kann die Position des Zwischenrades (47) festgelegt werden. Anschließend werden beide Rückstellfedern (55, 56) an den Lagerzapfen (41; 53) festgelegt. Das Abtriebszahnrad (52) wird am Lagerzapfen (53) z.B. mittels einer Befestigungsschraube befestigt.

Nun kann die Befestigungsplatte (111) an die Unterschale (77) der Kurbelplatte (72) montiert werden. Hierzu werden z.B. nach dem Einsetzen von Lagerbuchsen (119) in die Befestigungsplatte (111) Lagerzapfen (121) durch die Lagerbuchsen (119) und die koppelplattenseitigen Lagerzapfenaufnahmen (75; 84) hindurchgeführt. Die Lagerzapfen (121) können auch in diesem Fall von außen nach innen eingeschoben werden.

Das Einsetzen der Schwinghebel (101) erfolgt analog zur Montage der Unterschale (77). In den Sockel (33) und entlang der Unterschale (77) werden Kabel verlegt, die beispielsweise mit einem Stecker aus dem Ausführdurchbruch (82) der Oberschale (77) herausragen. Nun kann die Abdeckplatte (78) auf die Unterschale (77) aufgesetzt werden und an dieser befestigt werden. Die Kurbelplatte (72) ist nun verschlossen.

Der Sockel (33) der Verfahrvorrichtung (30) wird mit der Hebevorrichtung (12) verbunden. An die Befestigungsplatte (111) kann nun der Monitor (130) angeschraubt werden. Der oder die Stecker werden in Anschlußbuchsen des Monitors (130) eingesteckt. Der Zusammenbau kann auch in anderer Reihenfolge erfolgen.

Die gesamte Einsetzeinheit (10) wird nun z.B. in einen Tisch eingebaut, sodass die Abdeckklappe (17) nach oben zeigt, vgl. die Figuren 1 und 2. Nach dem Betätigen einer Betätigungstaste (15) wird die Verfahrvorrichtung (30) mittels der Hebevorrichtung (12) angehoben und ausgefahren. Sobald die Hebevorrichtung (12) die ausgefahrene Lage erreicht hat - die Verfahrvorrichtung (30) steht in der Ruhelage (131) - betätigt die Hebevorrichtung (12) oder der Bediener einen Freigabeschalter. Hiermit wird die Verfahrvorrichtung (30) freigegeben. Der Elektromotor (42) wird angesteuert. Die Rotation des Antriebsrads (44) wird über das Zwischenrad (47) auf das Abtriebsrad (52) übertragen, das die Kurbelplatte (72) schwenkt. Der von der Kurbel (142) und dem Gestell (141) eingeschlossene Winkel wird vergrößert. Der Monitor (130) wird um einen virtuellen Drehpunkt geschwenkt. Dieser virtuelle Drehpunkt ist der Schnittpunkt der oben genannten Mittelsenkrechten durch die gestellseitigen Schwenklager (145, 146). Er liegt außerhalb der Verfahrvorrichtung (30) auf der Seite des Monitors (130).

Beim Verfahren des Monitors (130) wird dieser in Richtung des Benutzers verfahren. Gleichzeitig wird der Winkel des Monitors (130) zu einer horizontalen Ebene vermindert. Während des Verfahrens vermindern die Rückstellfedern (55, 56) das erforderliche Drehmoment des Elektromotors (42), Es ist damit nur eine geringe Motorleistung erforderlich.

Das Verfahren dauert beispielsweise so lange, bis z.B. ein am Elektromotor (42) angeordneter Winkelgeber bei einem vorgegebenen Wert, z.B. bei einem vorprogrammierten Winkel oder bei Erreichen eines Endschalters, den Elektromotor (42) abschaltet, bis der Bediener durch Betätigung einer Taste oder eines Schalters die Bewegung beendet oder wenn das Getriebe (140) seine oben beschriebene Endlage erreicht hat. Im letztgenannten Fall schaltet beispielsweise eine Stromüberwachung des Elektromotors (42) diesen ab. Beispielsweise kann auch das Ansprechen eines Tischabstandssensors zum Abschalten der Schwenkbewegung führen.

Soll der Monitor (130) wieder in die Ausgangslage verfahren werden, wird beispielsweise die Betätigungstaste (15) erneut betätigt. Der Elektromotor (42) mit dem nachgeschalteten Rädergetriebe (43, 44, 47, 52) dreht in die Gegenrichtung. Die Verfahrvorrichtung (30) mit dem Monitor (130) wird aus der in den Figuren 5 - 9 dargestellten Gebrauchslage (132) in die in den Figuren 3 und 4 dargestellte Ruhelage (131) verfahren. In der Ruhelage (131) steht die Verfahrvorrichtung (30) in der oben beschriebenen Endlage, sodass das Getriebe (140) ein weiteres Verfahren verhindert. Die Verfahrvorrichtung (30) ist in einen kompakten Zustand zurückgefahren. Die Anlagefläche (112) der Befestigungsplatte (111) steht nun zumindest annähernd normal zu einer horizontalen Ebene. Zumindest annähernd bedeutet hier, dass die Anlagefläche (112) mit einer vertikalen Ebene maximal einen Winkel von fünf Grad einschließt. Beim Erreichen der Ruhelage (131) hat der Monitor (130) den Positionsschalter (34), z.B. einen Mikroendschalter, betätigt. Die Verfahrvorrichtung (30) kann nun entweder in der Ruhelage (131) verbleiben oder mittels der Hebevorrichtung (12) abgesenkt werden. Beim Absenken verfährt die Hebevorrichtung (12) die Verfahrvorrichtung (30) in der Höhenrichtung (7) vertikal nach unten. Die Abdeckklappe (17) schließt oder wird geschlossen.

Der genutzte Schwenkwinkel zwischen der Ruhelage (131) und einer gewählten Nutzlage ist beispielsweise mittels eines Softwareprogramms einstellbar. Hierbei wird z.B. dem Winkelgeber des Elektromotors (42) ein maximal genutzter Wert vorgegeben. Die Nutzlage kann zwischen der Ruhelage (131) und der Gebrauchslage (132) z.B. stufenlos einstellbar sein. Beispielsweise kann der Nutzer den Kurbelschwenkwinkel der Nutzlage und/oder der Ruhelage (131) durch Programmeingaben ändern.

Bei einer manuellen Rückstellung wird der Monitor (130) mit dem Getriebe (140) von Hand von der Gebrauchslage (132) oder von der Nutzlage in die Ruhelage (131) verschoben. Bei einem mit einer Hebevorrichtung (12) verbundenen Getriebe (140) kann dieses anschließend mittels dieser Hebevorrichtung (12) z.B. in einen Tisch abgesenkt werden. Auch ein manuelles Absenken ist denkbar.

Falls eine Wartung der Verfahrvorrichtung (30) erforderlich sein sollte, kann nach dem Trennen des Anschlußkabels der Monitor (130) von der Verfahrvorrichtung (30) abgenommen werden. Beim Austausch des Zuführkabels kann dann die Kurbelplatte (72) geöffnet werden.

Es ist auch denkbar, die Hebevorrichtung (12) und die Verfahrvorrichtung (30) mit einer gemeinsamen Antriebseinheit anzusteuern. Hierbei wird beispielsweise beim Anheben der Vorrichtung (30) mittels eines Hebels die Verfahrvorrichtung (30) ausgeschwenkt.

Die Verfahrvorrichtung (30) kann auch so ausgebildet sein, dass der Elektromotor (42) nur die Kurbelplatte (72) schwenkt. Beispielsweise ist dann in der Kurbelplatte (72) ein zweiter Elektromotor angeordnet, der die Befestigungsplatte (111) relativ zur Kurbelplatte (72) schwenkt. Bei einer derartigen Ausführungsform kann die Verfahrvorrichtung (30) ohne Schwinghebel (101) ausgebildet sein. Auch in diesem Ausführungsbeispiel ist die Ruhelage (131) so ausgebildet, dass die Anlagefläche (112) senkrecht zu einer horizontalen Ebene steht. Diese Verfahrvorrichtung (30) kann mit einer Hebevorrichtung (12) verbunden sein oder separat z.B. auf einem Tisch angeordnet sein. Mittels der beiden Motoren kann aus der Ruhelage (131) eine vorgegebene Nutzlage, z.B. die Gebrauchslage (132) des Monitors (130) angefahren werden. Es ist auch denkbar, beide genannten Motoren im Sockel (33) anzuordnen. Die Bewegung der Befestigungsplatte (111) erfolgt dann beispielsweise mittels eines Zugmitteltriebs, z.B. mittels eines Zahnriemens. Auch der Einsatz einer in der Kurbelplatte (72) angeordneten Kardanwelle oder eines Schub-Zug-Kurbelgetriebes, ist denkbar.

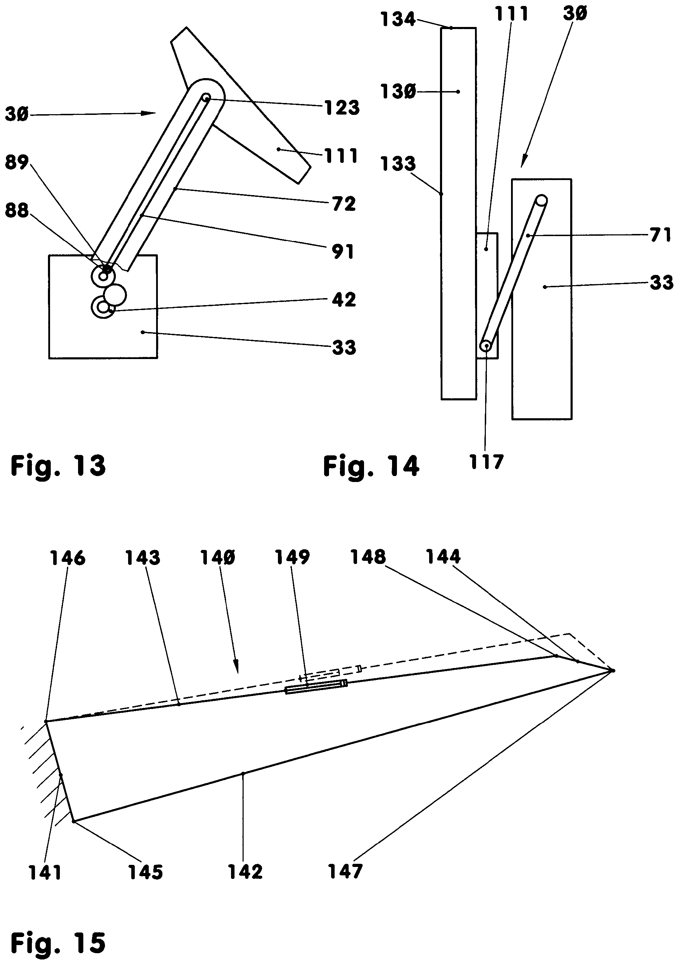

Die Figur 13 zeigt stark vereinfacht eine Verfahrvorrichtung (30) mit einem Antriebsmotor (42), wobei die Kurbelplatte (72) und die Befestigungsplatte (111) zwangsgekoppelt sind. Das Rädergetriebe (43, 44, 47, 52) zum Antrieb der Kurbelplatte (72) ist beispielsweise so ausgebildet, wie im Zusammenhang mit dem ersten Ausführungsbeispiel beschrieben. Mit dem Abtriesrad (52) kämmt ein z.B. in der Kurbelplatte (72) gelagertes Zahnrad (88), das auf einer gemeinsamen Welle mit einer Riemenscheibe (89) befestigt ist. Ein Zugmittel (91) z.B. in der Bauform eines Zahnriemens (91) überträgt die Drehbewegung des Abtriebsrades (52) auf eine am Schwenkgelenk der Befestigungsplatte (111) gelagerte zweite Riemenscheibe (123). Bei jeder Drehung des Antriebsmotors (42) werden damit sowohl die Kurbelplatte (72) als auch die Befestigungsplatte (111) z.B. von der Ruhelage (131) relativ zueinander zwangsgeführt in Richtung der Gebrauchslage (132) geschwenkt.

In der Figur 14 ist eine Verfahrvorrichtung (30) dargestellt, bei der die Befestigungsplatte (111) mit dem Monitor (130) in der Ruhelage (131) auf der dem Benutzer abgewandten Seite liegt. Die Unterkante (134) des Monitors (130) zeigt dann nach oben. Beim Verfahren der Verfahrvorrichtung (30) aus der Ruhelage (131) in Richtung der Gebrauchslage (132) wird die Befestigungsplatte (111) mittels einer Kurbel (142) über den Sockel (33) geschwenkt und um ein koppelseitiges Kurbellager (117) aufgeschwenkt. Das hierfür eingesetzte Getriebe (140) des Verfahrmechanismus (30) kann wie die genannten Getriebe (140) ausgebildet sein.

Die Figur 15 zeigt schematisch ein Gelenkviereck (140) mit längenverstellbarer Schwinge (143). Hierbei ist mit Volllinien eine erste Getriebestellung dargestellt. Mit gestrichelten Linien ist eine zweite Getriebestellung dargestellt, bei der die Schwinge (143) verlängert ist. Beispielsweise ist die Länge der Schwinge (143) mittels eines Schubgelenks (149) verstellbar. Dieses kann mittels eines Motors, mittels einer Zylinder-Kolben-Einheit, eines hydraulischen Antriebs, eines Linearantriebs, etc. antreibbar sein oder manuell einstellbar sein. Nach dem Verstellen kann die Längenverstellung z. B. mittels einer Bremse, mittels einer Klemmschraube, etc. arretiert werden. Diese Längenverstellung kann in der Nutzlage oder in der Gebrauchslage (132) erfolgen. Bei einer Längenverstellung der Schwinge (143) wird die Koppel (144) relativ zum Gestell (141) geschwenkt. Im Ausführungsbeispiel wird die Koppel (144) und damit auch ein an der Koppel gehaltene Monitor steiler gestellt. Hiermit kann beispielsweise ein blendender Lichteinfall auf den Monitor vermindert werden.

Vor dem Verfahren der Vorrichtung aus der Nutzlage oder aus der Gebrauchslage (132) in die Ruhelage (131) kann die Schwinge (143) in ihre Ausgangslänge zurückgestellt werden. Auch ist es denkbar, die eingestellte Länge beizubehalten, soweit die obengenannte Bedingung für die Länge der Getriebeglieder (141 - 144) in der Ruhelage (131) erfüllt ist. Auch eine Verkürzung der Schwinge (143) ist denkbar. Die Längenverstellung kann auch am Gestell (141), an der Kurbel (142) oder an der Koppel (144) angeordnet sein.

Auch Kombinationen der verschiedenen Ausführungsformen sind denkbar.

Bezugszeichenliste:

1    Umgebung

5    Längsrichtung
6    Breitenrichtung, Querrichtung
7    Höhenrichtung

10    Einsetzeinheit
11    Einsatzgehäuse
12    Hebevorrichtung
13    Auflageflansch
14    Oberseite
15    Betätigungstasten
16    Führungsschlitz
17    Abdeckklappe

18 Antrieb

19 Zylinder-Kolben-Einheit

21 Führungsschiene

30 Vorrichtung, Verfahrvorrichtung

31 abgesenkte Lage

32 ausgefahrene Lage

33 Sockel

34 Positionsschalter, Tast-Endschalter

35 Schwenklagersitz, Durchgangsbohrungen

36 Schwenklagersitz, Längsdurchbrüche

37 Schwenklager, Kurbellager

38 Schwenklager, Schwingenlager

39 Gleitlagerbuchsen

41 Lagerstift, Lagerzapfen

42 Elektromotor , Gleichstrommotor, Getriebemotor, Teil des Antriebsstrangs

43 Zahnradgetriebe, Teil des Antriebsstrangs

44 Antriebszahnrad, Teil des Antriebsstrangs

45 Mitnahmesteg

46 Antriebswelle

47 Zwischenrad, Teil des Antriebsstrangs

48 Welle von (47), Zwischenradwelle

51 Sockelöffnungen, Werkzeugdurchbrüche

52 Abtriebsrad, Teil des Antriebsstrangs

53 Lagerwelle, Lagerstift

55 Rückstellfeder, Schenkelfeder

56 Rückstellfeder

57 Vorderseite

58 Motoraufnahme

59 Seitenerker

61 Oberseite

62 Gabelstützen

63 Absatz

64 Aufnahmeausnehmung

65 Kabelführungsdurchbruch

66 Grundfläche

71 Verbindungselemente

72 Kurbelplatte

73 Verbindungsplatte

74 Schwenklagerhülse, Lagerzapfenaufnahme

75 Schwenklagerhülse, Lagerzapfenaufnahme

76 Fixierstift, Fixierschrauben

77 Unterschale

78 Abdeckplatte

79 Innenraum

81 Einführdurchbruch

82 Ausführdurchbruch

83 Lagerzapfenaufnahme

84 Lagerzapfenaufnahme

85 Randstrebe

86 Randstrebe

87 Gewindedurchbrüche

EP 3 604 889 B1

88 Zahnrad
89 Riemenscheibe

91 Zugmittel, Zahnriemen

101 Schwinghebel

111 Befestigungsplatte
112 Anlagefläche
113 Schwenklagersitz, Lageraufnahme
114 Schwenklagersitz, Lageraufnahme
115 Schwenklagersitz, Lageraufnahme
116 Schwenklagersitz, Lageraufnahme
117 Schwenklager, Kurbelplattenlager
118 Schwenklager, Schwingenlager
119 Gleitlagerbuchsen

121 Lagerstift, Lagerzapfen
122 Kabeleinführöffnung
123 Riemenscheibe

130 Anzeigegerät, Monitor, Flachbildschirm, Touchscreen
131 Ruhelage
132 Gebrauchslage
133 Sichtseite
134 Unterkante
135 Aufschwenkrichtung

140 Getriebe, Gelenkviereck
141 Gestell
142 Kurbel
143 Schwinge
144 Koppelglied, Koppel
145 Schwenkgelenk, gestellseitig
146 Schwenkgelenk, gestellseitig
147 Schwenkgelenk, koppelseitig
148 Schwenkgelenk, koppelseitig
149 Schubgelenk

151 Schwenkachse
152 Schwenkachse
153 Schwenkachse
154 Schwenkachse

$L_G$ Länge des Gestells (141)
$L_K$ Koppellänge, Länge der Koppel (144)
$L_{KU}$ Kurbellänge, Länge der Kurbel (142)
$L_S$ Länge der Schwinge (143)
$\alpha$ Winkel zwischen Gestell (141) und Kurbel (142) in der Ruhelage (131)
$\beta$ Winkel zwischen Gestell (141) und Kurbel (142) in der Gebrauchslage (132)

**Patentansprüche**

1. Vorrichtung (30) mit einem Sockel (33) und mit einer Befestigungsplatte (111) für ein Anzeigegerät (130), wobei die Befestigungsplatte (111) relativ zum Sockel (33) von einer Ruhelage (131) in Richtung einer Gebrauchslage (132) und zurück schwenkbar ist, wobei in der Ruhelage (131) eine an der Befestigungsplatte (111) angeordnete oder mit dieser verbundene Anlagefläche (112) für das Anzeigegerät (130) zumindest annähernd normal zu einer Grundfläche (66) des Sockels (33) orientiert ist, wobei zwischen dem Sockel (33) und der Befestigungsplatte (111) mindestens zwei Verbindungselemente (71) angeordnet sind, die sowohl im Sockel (33) als auch an der Befestigungsplatte (111) schwenkbar gelagert sind, wobei der Sockel (33) eine parallel zur Grundfläche (66) liegende Hüllfläche bestimmt, innerhalb der in der Ruhelage (131) die Vorrichtung (30) bei einer Normalprojektion auf diese Hüllfläche liegt, wobei in der Gebrauchslage (132) die Befestigungsplatte (111) in einer Normalprojektion auf die Ebene der Hüllfläche vollständig außerhalb der genannten Hüllfläche liegt und wobei eine Kurbelplatte (72) zwei jeweils ein Verbindungselement (71) bildende, gemeinsam an einer Verbindungsplatte (73) angeordnete Kurbeln (142) umfasst, **dadurch gekennzeichnet,**

- **dass** die Verbindungselemente (71) und die Befestigungsplatte (111) relativ zum Sockel (33) mittels mindestens eines Elektromotors (42) antreibbar sind.
- **dass** entweder die Befestigungsplatte (111) und die Verbindungselemente (71) relativ zueinander und relativ zum Sockel (33) zwangsgeführt sind oder.
- **dass** in der Kurbelplatte (72) ein zweiter Elektromotor angeordnet ist, der die Befestigungsplatte (111) relativ zur Kurbelplatte (72) schwenkt.

2. Vorrichtung (30) nach Anspruch 1, **dadurch gekennzeichnet, dass** zwischen dem Motor (42) und einem Verbindungselement (71) ein Zahnradgetriebe (43) angeordnet ist.

3. Vorrichtung (30) nach Anspruch 1, **dadurch gekennzeichnet, dass** das Verbindungselement (71) relativ zum Sockel (33) mittels mindestens einer das Verbindungselement (71) in Richtung der Ruhelage (131) belastenden Rückstellfeder (55; 56) belastet ist.

4. Vorrichtung (30) nach Anspruch 1, **dadurch gekennzeichnet, dass** der Sockel (33), die Befestigungsplatte (111) und mindestens zwei Verbindungselemente (71) ein nicht umlauffähiges Gelenkviereck (140) bilden.

5. Vorrichtung nach den Ansprüchen 1 und 4, **dadurch gekennzeichnet, dass** der Sockel (33) ein Gestell (141), die Befestigungsplatte (111) eine Koppel (144), das mittels des Motors (42) angetriebene Verbindungselement (71) die Kurbel (142) und ein weiteres Verbindungselement (71) eine Schwinge (143) bildet, wobei in der Ruhelage (131) die Summe der Länge ($L_{KU}$) der Kurbel (142) und der Länge ($L_K$) der Koppel (144) größer ist als die Summe der mit dem Kosinus des von der Kurbel (142) und dem Gestell (141) eingeschlossenen Winkels ($\alpha$) multiplizierten Länge ($L_G$) des Gestells (141) und der positiven Wurzel aus dem Quadrat der Länge (Ls) der Schwinge (143), vermindert um das Produkt aus dem Quadrat der Länge ($L_G$) des Gestells (141) und dem Quadrat des Sinus des von der Kurbel (142) und dem Gestell (141) eingeschlossenen Winkels ($\alpha$).

6. Vorrichtung (30) nach Anspruch 1 mit einem an der Anlagefläche (112) anliegenden und mit der Befestigungsplatte (111) verbundenen Anzeigegerät (130), **dadurch gekennzeichnet, dass** im Sockel (33) ein mittels des Anzeigegeräts (130) in der Ruhelage (131) betätigbarer Positionsschalter (34) angeordnet ist.

7. Einsetzeinheit (10) mit einem Einsatzgehäuse (11), mit einer im Einsatzgehäuse (11) angeordneten Hebevorrichtung (12) und mit einer mittels der Hebevorrichtung (12) anhebbaren und absenkbaren Vorrichtung (30) nach Anspruch 1, **dadurch gekennzeichnet, dass** der Sockel (33) mit der Hebevorrichtung (12) verbunden ist.

8. Einsetzeinheit (10) nach den Ansprüchen 6 und 7, **dadurch gekennzeichnet, dass** die Betätigung des Positionsschalters (34) eine Betätigung der Hebevorrichtung (12) freigibt.

**Claims**

1. Apparatus (30) with a base (33) and with a mounting plate (111) for a display device (130), wherein the mounting plate (111) is pivotable from a rest position (131) into an operating position (132) and back relative to the base (33), wherein in the rest position (131) a contact surface (112) arranged on the mounting plate (111) or connected thereto is orientated at least approximately normally to a base surface (66) of the base (33) for the display device (130), wherein at least two connecting elements (71) are arranged between the base (33) and the mounting plate (111)) and are mounted pivotably both in the base (33) and on the mounting plate (111), wherein the base (33) determines an enveloping surface aligned parallel to the base surface (66), within which in an orthographic projection the apparatus (30) in the rest position (131) bears on said enveloping surface, wherein in an orthographic projection the mounting plate (111) in the operating position (132) bears on the plane of the enveloping surface entirely outside of said enveloping surface, and wherein a crank plate (72) comprises two cranks (142), which each separately form a connecting element (71) and are arranged together on a connecting plate (73), **characterized in that**

- the connecting elements (71) and the mounting plate (111) can be driven relative to the base (33) by means of at least one electric motor (42)
- either the mounting plate (111) and the connecting elements are (71) are positively guided relative to each other and relative to the base (33), or
- a second electric motor is arranged inside the crank plate (72), which second electric motor pivots the mounting plate (111) relative to the crank plate (72).

2. Apparatus (30) according to Claim 1, **characterized in that** a toothed gearing (43) is arranged between the motor (42) and a connecting element (71).

3. Apparatus (30) according to Claim 1, **characterized in that** the connecting element (71) is loaded relative to the base (33) by means of at least one return spring (55; 56) which biases the connecting element (71) in the direction of the rest position (131).

4. Apparatus (30) according to Claim 1, **characterized in that** the base (33), the mounting plate (111) and at least two connecting elements (71) form a non-revolving four-bar linkage (140).

5. Apparatus according to Claims 1 and 4, **characterized in that** the base (33) forms a support frame (141), the mounting plate (111) forms a connecting rod (144), the connecting element (71) driven by the motor (42) forms the crank (142) and a further connecting element (71) forms an oscillating crank (143), wherein in the rest position (131) the sum of the length ($L_{KU}$) of the crank (142) and the length ($L_K$) of the connecting rod (144) is greater than the sum of the length ($L_G$) of the support frame (141) multiplied by the cosine of the angle ($\alpha$) formed between the crank (142) and the support frame (141) combined with the positive root from the square of the length ($L_s$) of the oscillating crank (143) minus the product of the square of the length ($L_G$) of the support frame (141) and the square of the sine of the angle ($\alpha$) formed between the crank (142) and the support frame (141).

6. Apparatus (30) according to Claim 1, with a display device (130) that rests on the contact surface (112) and is connected to the mounting plate (111), **characterized in that** a position switch (34) that can be actuated via the display device (130) in the rest position (131) is arranged in the base (33).

7. Insertion unit (10) with an insert housing (11), having a lifting mechanism (12) arranged in the insert housing (11), and having an apparatus (30) according to Claim 1 which can be raised and lowered by means of the lifting mechanism (12), **characterized in that** the base (33) is connected to the lifting mechanism (12).

8. Insertion unit (10) according to Claims 6 and 7, **characterized in that** the actuation of the position switch (34) enables actuation of the lifting mechanism (12) .

**Revendications**

1. Dispositif (30) pourvu d'un socle (33) et d'une plaque de fixation (111) pour un terminal d'affichage (130), la plaque de fixation (111) étant susceptible de pivoter par rapport au socle (33) d'une position de repos (131) dans la direction d'une position d'utilisation (132) et inversement, dans la position de repos (131), une surface d'appui (112) pour le terminal d'affichage (130) placée sur la plaque de fixation (111) ou reliée avec celle-ci étant orientée au moins approximativement à la normale par rapport à une surface de base (66) du socle (33), entre le socle (33) et la plaque de fixation (111) étant placés au moins deux éléments de liaison (71) qui sont logés en étant susceptibles de pivoter, aussi bien dans le socle (33) qu'également sur la plaque de fixation (111), le socle (33) définissant une surface enveloppante située à la parallèle de la surface de base (66), à l'intérieur de laquelle, dans la position de repos (131), lors d'une projection normale, le dispositif (30) se situe sur ladite surface enveloppante, dans la position d'utilisation (132), lors d'une projection normale sur le plan de la surface enveloppante, la plaque de fixation (111) se situant totalement hors de la surface enveloppante et une plaque de manivelles (72) comprenant deux manivelles (142), formant chacune un élément de liaison (71), placées ensemble sur une plaque de liaison (73), **caractérisé**

- **en ce que** les éléments de liaison (71) et la plaque de fixation (111) sont susceptibles d'être entraînés par rapport au socle (33) au moyen d'au moins un moteur électrique (42),

- **en ce que** soit la plaque de fixation (111) et les éléments de liaison (71) sont soumis à un guidage forcé l'un par rapport à l'autre et par rapport au socle (33), ou
- **en ce que** dans la plaque de manivelles (72) est placé un deuxième moteur électrique qui fait pivoter la plaque de fixation (111) par rapport à la plaque de manivelles (72).

2. Dispositif (30) selon la revendication 1, **caractérisé en ce qu'**entre le moteur (42) et un élément de liaison (71) est placée une transmission par engrenage (43).

3. Dispositif (30) selon la revendication 1, **caractérisé en ce que** l'élément de liaison (71) est contraint par rapport au socle (33) au moyen d'au moins un ressort de rappel (55 ; 56) contraignant l'élément de liaison (71) dans la direction de la position de repos (131).

4. Dispositif (30) selon la revendication 1, **caractérisé en ce que** le socle (33), la plaque de fixation (111) et au moins deux éléments de liaison (71) forment un quadrilatère articulé (140) impropre à la circulation.

5. Dispositif selon les revendications 1 et 4, **caractérisé en ce que** le socle (33) forme un châssis (141), la plaque de fixation (111) forme une bielle (144), l'élément de liaison (71) entraîné au moyen du moteur (42) forme la manivelle (142) et un élément de liaison (71) supplémentaire forme un bras oscillant (143), dans la position de repos (131), la somme de la longueur ($L_{Ku}$) de la manivelle (142) et de la longueur ($L_K$) de la bielle (144) étant supérieure à la somme de la longueur ($L_G$) du châssis (141) multipliée par le cosinus de l'angle ($\alpha$) inclus par la manivelle (142) et le châssis (141) et la racine positive du carré de la longueur ($L_s$) du bras oscillant (143), minorée du produit du carré de la longueur ($L_G$) du châssis (141) et du carré du sinus de l'angle ($\alpha$) inclus par la manivelle (142) et la châssis (141).

6. Dispositif (30) selon la revendication 1, pourvu d'un terminal d'affichage (130) adjacent à la surface d'appui (112) et relié avec la plaque de fixation (111), **caractérisé en ce que** dans le socle (33) est placé un interrupteur de position (34) susceptible d'être actionné au moyen du terminal d'affichage (130) dans la position de repos (131).

7. Unité insérable (10), pourvue d'un boîtier insérable (11), pourvue d'un dispositif de levage (12) placé dans le boîtier insérable (11), pourvue d'un dispositif (30) selon la revendication 1, susceptible d'être levé et abaissé au moyen du dispositif de levage (12), **caractérisée en ce que** le socle (33) est relié avec le dispositif de levage (12).

8. Unité insérable (10) selon les revendications 6 et 7, **caractérisée en ce que** l'actionnement de l'interrupteur de position (34) libère un actionnement du dispositif de levage (12).

**Fig. 1**

**Fig. 3**

**Fig. 2**

**Fig. 4**

**Fig. 5**

**Fig. 6**

**Fig. 7**

**Fig. 8**

Fig. 9

**Fig. 10**

**Fig. 11**

**Fig. 12**

**Fig. 13**

**Fig. 14**

**Fig. 15**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29919495 U1
- US 20100084535 A1
- US 5401089 A1
- DE 102014006606 A1